# EUROPÄISCHE PATENTSCHRIFT

(11) **EP 3 636 059 B1**
(45) Veröffentlichungstag und Bekanntmachung des Hinweises auf die Patenterteilung: **11.05.2022**
(21) Anmeldenummer: 19201894.3
(22) Anmeldetag: 08.10.2019
(51) Int. Cl.: A01B 51/04, A01B 63/32

(54) **ANHÄNGER SOWIE EIN GESPANN MIT EINEM ZUGFAHRZEUG UND EINEM DERARTIGEN ANHÄNGER**
TRAILER AND A COMBINATION WITH A TRACTION VEHICLE AND SUCH A TRAILER
REMORQUE AINSI QU'ENSEMBLE ATTELÉ DOTÉ D'UN VÉHICULE TRACTEUR ET D'UNE TELLE REMORQUE

(30) Priorität: 08.10.2018 DE 202018105736 U
(43) Veröffentlichungstag der Anmeldung: 15.04.2020
(73) Patentinhaber: Die DS Reitsand GmbH & Co. KG, 49565 Bramsche (DE)
(72) Erfinder: STUCKENBERG, Rainer, 49565 Bramsche (DE)
(74) Vertreter: Träger, Denis

(56) Entgegenhaltungen:
- GB-A- 2 306 097
- US-A- 6 148 928
- US-A1- 2011 155 888
- US-A1- 2012 186 214
- US-B1- 8 079 425

## Beschreibung

Gegenstand der Erfindung ist ein an ein Zugfahrzeug koppelbarer Anhänger gemäß dem Gegenstand des Anspruchs 1.

Als Zugfahrzeug in Betracht kommt beispielsweise ein Traktor, ein Quad oder ein vorzugsweise geländegängiger Personenkraftwagen, wie ein Sport Utility Vehicle (SUV).

Ferner betrifft die Erfindung ein Gespann, welches ein Zugfahrzeug und ein an das Zugfahrzeug gekoppeltes Anbaugerät umfasst.

Als Stand der Technik sind Anhänger und Anbaugeräte zur Bodenbearbeitung mit und ohne eigenem Fahrwerk bekannt. Anbaugeräte zur Bodenbearbeitung ohne Fahrwerk werden in aller Regel an eine hydraulische Dreipunktaufhängung eines Zugfahrzeuges angekoppelt. Diese Anbaugeräte können somit mittels der am Zugfahrzeug vorhandenen Dreipunktaufhängung zwischen einer angehobenen Ruheposition und einer abgesenkten Arbeitsposition aufwärts und abwärts bewegt werden.

Ein Anbaugerät zur Bodenbearbeitung mit eigenem Fahrwerk verfügt in aller Regel auch über eine Anhängevorrichtung zur Anhängung an ein Zugfahrzeug und bildet somit insgesamt einen Anhänger aus.

Im Bereich der Landmaschinen- und Kommunaltechnik sind Anhänger mit integrierten Anbaugeräten beispielsweise in Form von Bodenbearbeitungsgeräten, Reinigungsgeräten oder Sämaschinen etc. bekannt. Der Antrieb dieser Geräte erfolgt in aller Regel vom Zugfahrzeug aus, beispielsweise indem das Anbaugerät hydraulische Antriebe umfasst und mittels entsprechend vorgesehener Leitungen an die Hydraulikanlage des Zugfahrzeuges koppelbar ist.

US 80 79 425 B1 beschreibt einen an eine Zugmaschine koppelbaren Anhänger mit autonomer Stromversorgung und einem Aktuator, mit dem der Anhänger in seinem Heckbereich gehoben und gesenkt werden kann. Die zur Bearbeitung des Bodens vorgesehenen Arbeitswerkzeuge sind an der Unterseite des Anhänger-Rahmens befestigt.

Die Räder können in Bezug auf den Anhängerrahmen angehoben und abgesenkt werden, wobei die Fahrzeugachse außerhalb des Anhängerrahmens in dessen Heckbereich liegt. Die Arbeitswerkzeuge werden also direkt am Anhängerrahmen, zwischen der Fahrzeugachse des Anhängers und einer an die Zugmaschine koppelbaren Deichsel untergebracht. Eine Kopplungsmöglichkeit der Arbeitswerkzeuge am Heck des Anhängers oder ein Antrieb zum aktiven Betrieb von Arbeitswerkzeugen ist nicht vorgesehen. US 2012/186214 A1 beschreibt einen Anhänger mit den Merkmalen gemäß dem Oberbegriff des Gegenstands des Anspruchs 1.

In DE 10 2004 054 749 A1 ist ein an eine Zugmaschine angekoppeltes Anbaugerät offenbart, welches elektronische Sensoren aufweist, die bestimmte Betriebsparameter des Anbaugeräts erfassen und entsprechende Mess-Ausgangssignale an eine Anbaugeräte-Ansteuereinrichtung der Zugmaschine übertragen, um der Zugmaschine einen steuernden und/oder regelnden Einfluss auf die Betriebsparameter des Anbaugeräts und/oder eine Anzeige ihrer Betriebsparameter zu ermöglichen. Zur Verringerung des Wartungsaufwands ist ein Generator zur Stromversorgung der Sensoren vorgesehen, der mittels eines Masse/Feder-Systems Erschütterungen des Anbaugeräts durch Induktion in elektrische Energie umwandelt und mit dieser autark erzeugten elektrischen Energie die Sensoren des Anbaugeräts mit Strom versorgt.

US 61 48 928 zeigt ein für ein Pick-up-Fahrzeug vorgesehenes

Dreipunktaufhängungssystem mittels dessen gängige landwirtschaftliche Geräte wie Mäher, Pflüge und Bodenbearbeitungsgeräte an das Pick-up-Fahrzeug koppelbar sind. Zum Antrieb der Geräte kann eine Zapfwelle vorgesehen sein, mittels derer das Anbaugerät vom Motor des Zugfahrzeuges mechanisch antreibbar ist. Das Anhängersystem ist zum Ankoppeln an eine Zugmaschine, insbesondere an SUV, nicht geeignet.

Aufgabe der vorliegenden Erfindung ist es, einen neuartigen Anhänger vorzuschlagen, welcher einen einfacheren Aufbau und ein alternatives Hubsystem für ein zu koppelndes Arbeitswerkzeug aufweist.

Diese Aufgabe wird gelöst durch einen Anhänger mit den Merkmalen des Anspruchs 1.

Bei dem Zugfahrzeug kann es sich beispielsweise um einen mit einem Kugelhals einer Anhängekupplung ausgestatteten Personenkraftwagen (PKW), bevorzugt um einen Sport Utility Vehicle (SUV) oder ein Quad, beziehungsweise All Terrain Vehicle (ATV) handeln. Als Zugfahrzeug einsetzbar sind weiterhin Spezialfahrzeuge, die insbesondere zum Einsatz im Kommunalbereich vorgesehen sind, beispielsweise der "Multicar" des Herstellers Hako oder das Allzweckfahrzeuge "Gator" des Herstellers John Deere. Die Anhängekupplung des Zugfahrzeuges kann fest eingebaut oder abnehmbar sein.

Bei dem Anbaugerät zur Bearbeitung eines Bodens kann es sich beispielsweise um einen Bodenstriegel, einen Besen, einen Schneepflug, eine Schneefräse, eine Bodenwalze oder Ähnliches handeln.

Der erfindungsgemäße Anhänger umfasst ein Fahrgestell mit wenigstens einer Fahrzeugachse und einer Deichsel und ist an ein Zugfahrzeug koppelbar. Das Anbaugerät bzw. der wie beschrieben ausgebildete Anhänger umfasst weiterhin ein Hubwerk und ein Stromversorgungsgerät, mit welchem das Hubwerk und/oder das Arbeitswerkzeug antreibbar ist.

Das Stromversorgungsgerät ist autonom von der Elektrik des Zugfahrzeuges und stellt die Energie zum Antrieb des Hubwerks und/oder des Arbeitswerkzeuges zur Verfügung. Je nach Anwendungsfall können das Anbaugerät und/oder das Hubwerk vom Zugfahrzeug aus oder mittels eines separaten Bedienelementes betrieben werden.

Das Hubwerk ist einerseits an das Fahrgestell und andererseits an das Anbaugerät gekoppelt. Bei Absenken oder Anheben des Hubwerks erfolgt somit eine Relativbewegung zwischen Fahrgestell und Anbaugerät und das Arbeitswerkzeug ist gegenüber dem Fahrgestell anhebbar oder absenkbar.

Das Arbeitswerkzeug kann fest mit dem Anbaugerät und dem Anhänger, beziehungsweise dem Hubwerk des Anhängers, verbunden sein. In diesem Fall stellt der Anhänger mit dem fest anmontierten Anbaugerät eine Einzweck-Maschine dar. Alternativ dazu kann zwischen Hubwerk und Anbaugerät eine Koppelstelle vorgesehen sein, so dass unterschiedliche Anbaugeräte mit gegebenenfalls unterschiedlichen Arbeitswerkzeugen an das Hubwerk montierbar sind und je nach anmontiertem Anbaugerät unterschiedliche Arbeiten durchführbar sind. Um das Umrüsten von einem Anbaugerät auf ein anderes zu erleichtern, kann die Koppelstelle mit Schnellverschlüssen versehen sein.

Wesentlich ist, dass der Anhänger unabhängig vom Zugfahrzeug und damit flexibel und einfach an unterschiedliche Zugfahrzeuge koppelbar ist. Bei dem erfindungsgemäßen Anhänger kommt es somit lediglich darauf an, dass die Anhängevorrichtungen von Zugfahrzeug und Anhänger zueinander kompatibel sind. Da diese Anhängevorrichtungen genormt sind, gibt es insgesamt nur wenige verschiedene Ausführungsformen. Für Zugfahrzeuge und Anhänger der hier relevanten Größenordnung haben sich Bolzenkupplungen und insbesondere auch Kugelkopfkupplungen mit einem Kugeldurchmesser von 50 mm weitgehend durchgesetzt.

Der erfindungsgemäße Anhänger zeichnet sich somit dadurch aus, dass er lediglich an ein Zugfahrzeug angehängt werden muss und wenigstens einen eigenen Antrieb umfasst, der nicht von der Energieversorgung durch das Zugfahrzeug abhängig ist. Der eigene Antrieb kann mechanisch, hydraulisch, elektrisch oder gemischt sein. Durch die selektive Nutzungsmöglichkeit der verfügbaren Antriebsarten können praktisch alle Aufgaben des Anbaugerätes beziehungsweise eines Gespanns, wie Anheben und Absenken sowie Antrieb des Arbeitswerkzeugs realisiert werden.

Der Anhänger umfasst einen Verbrennungsmotor. Durch Einsatz des zusätzlichen Verbrennungsmotors kann der Einsatz des Stromversorgungsgerätes auf solche Arbeiten eingeschränkt werden, die relativ wenig Energie benötigen. Hintergrund ist, dass das Stromversorgungsgerät vorzugsweise durch eine Batterie oder einen Akkumulator (Akku) mit elektrischer Energie versorgt wird und die Einsatzzeit des Stromversorgungsgerätes somit von der Speicherkapazität der Batterie bzw. des Akkus abhängig ist.

Der Verbrennungsmotor treibt eine Hydraulikpumpe an, welche wiederum ein mit einem hydraulischen Antrieb versehenes Anbaugerät antreibt. Ergänzend kann der Verbrennungsmotor auch eine mechanische Kraftübertragung auf ein Anbaugerät bereitstellen, beispielsweise, indem sowohl Verbrennungsmotor als auch Anbaugerät eine Zapfwellenkupplung umfassen und die Antriebsleistung mittels einer Gelenkwelle vom Verbrennungsmotor auf das Anbaugerät übertragen wird.

Der besondere Vorteil bei Einsatz eines zusätzlichen Verbrennungsmotors gegenüber einem ausschließlich elektrisch angetriebenen System liegt darin, dass die Gesamteinsatzzeit auch bei Einsatz relativ kleiner Batterien beziehungsweise Akkus insgesamt relativ lang ist. Durch den zusätzlichen Verbrennungsmotor ist es somit möglich, die Batterie beziehungsweise das Akku des Stromversorgungsgerätes relativ klein zu dimensionieren und trotzdem eine lange Einsatzdauer zu ermöglichen.

So kann beispielsweise der Einsatz des Stromversorgungsgerätes auf den Antrieb des Hubwerkes und damit das Anheben und Absenken des Anbaugerätes eingeschränkt werden. Etwaige am Anbaugerät angebrachte und mittels einer Kraftübertragung angetriebene Werkzeuge (aktive Werkzeuge) müssen somit nicht elektrisch angetrieben werden, sondern können über den Verbrennungsmotor mechanisch oder hydraulisch angetrieben werden. Bei den aktiv angetriebenen Werkzeugen kann es sich beispielsweise um eine Schnee- oder Bodenfräse, eine Kehrwalze oder ähnliches handeln.

Ein weiterer Vorteil bei Ausrüstung eines Anhängers mit eigenem Verbrennungsmotor liegt in der Erweiterung des Einsatzspektrums des erfindungsgemäßen Anhängers. Aus dem Bereich der Kommunal- und Landmaschinentechnik ist eine Vielzahl von Anbaugeräten mit normierten Antriebsschnittstellen bekannt. Diese Anbaugeräte werden üblicherweise an ein dafür vorgesehenes Zugfahrzeug angebaut und vom Zugfahrzeug mechanisch oder hydraulisch angetrieben. Ein mit Verbrennungsmotor und entsprechender Antriebsschnittelle ausgestatteter Anhänger ersetzt in Bezug auf den Antrieb der Arbeitswerkzeuge somit die Antriebsschnittstelle des Zugfahrzeuges. Vereinfacht gesagt übernimmt das den erfindungsgemäßen Anhänger ziehende Zugfahrzeug lediglich die Zugarbeit während das Anheben und Absenken des Anbaugerätes und der Antrieb etwaiger aktiver Arbeitswerkzeuge unabhängig vom Zugfahrzeug ist.

Der vorgeschlagene Antrieb kann als Hybridantrieb, insbesondere Mischhybridantrieb bezeichnet werden, da sein Verbrennungsmotor zusammen mit dem Elektromotor oder getrennt vom Elektromotor genutzt werden kann.

Vorteilhaft ist, die Hydraulikpumpen des Elektromotors und/oder des Verbrennungsmotors mit Hydrauliköl aus einem am Anhänger angebrachten zentralen Hydrauliköltank mit dem erforderlichen Öl zu versorgen.

Vorzugsweise ist das Stromversorgungsgerät im Bereich der am Anhänger vorgesehenen Fahrzeugachse, insbesondere bevorzugt in einem niedrigen Bereich des Fahrgestells angeordnet. Hierdurch ergibt sich ein einerseits niedriger Schwerpunkt und andererseits ein großer Freiraum, in dem das Hubwerk und das Arbeitswerkzeug anmontierbar sind.

Das Stromversorgungsgerät soll stets über eine für den Antrieb von Hubwerk und Anbaugerät ausreichende Leistung verfügen. Aus dem Grund kann es mit einem sogenannten Erhaltungsgerät verbindbar sein, um im Notfall, beispielsweise bei längeren Stillstandzeiten, die Betriebsspannung auf dem erforderlichen Niveau zu halten.

Das Stromversorgungsgerät kann wenigstens einen wiederaufladbaren Akkumulator oder wenigstens eine austauschbare Batterie umfassen. Der Einsatz von Batterie oder Akkumulator ist auch deshalb vorteilhaft, weil hierdurch die Nutzung verschiedener Zugfahrzeuge ermöglicht wird, deren Stromversorgung durchaus auf andere Art oder mit anderer Spannung als der am Anbaugerät vorgesehen Art und Spannung erfolgen kann.

Optional ist es möglich, das Stromversorgungsgerät zusätzlich von einer eingebauten oder externen Solarstromanlage aufzuladen.

An den Akkumulator oder an die Batterie kann wenigstens eine elektrohydraulische Pumpe angeschlossen sein, mit welcher die Hydraulikzylinder des Hubwerkes betätigbar sind.

Alternativ zur Ausbildung eines Hubwerks durch Hydraulik-, Pneumatik- oder Elektrozylinder kann das Hubwerk auch durch einen an sich bekannten Dreipunkt-Kraftheber ausgebildet sein. Der Dreipunkt-Kraftheber umfasst vorzugsweise zwei elektrohydraulisch betätigbare Hydraulikzylinder. Ein solcher Heckkraftheber, welcher normalerweise am Zugfahrzeug, wie einem Schlepper, vorgesehen ist, kann somit in dem Anbaugerät integriert sein, so dass sich die Vorteile eines Dreipunktkrafthebers auch dann nutzen lassen, wenn das Anbaugerät an einem nicht an ein mit einem Dreipunkt-Kraftheber ausgestatten Zugfahrzeug eingesetzt wird.

Darüber hinaus bildet der Dreipunkt-Kraftheber eine komfortable Koppelstelle zum Einhängen unterschiedlicher Arbeitswerkzeuge. Insbesondere kann der Dreipunkt-Kraftheber an der Heckseite des Arbeitsgerätes installiert sein, so dass etwaige Arbeitswerkzeuge besonders einfach ankoppelbar sind und dort mittels des Dreipunkt-Krafthebers angehoben und abgesenkt werden können. Mit dem Einsatz von Dreipunkt-Kraftheber können die Nachteile der Konstruktion gemäß US 80 79 425 B1 vermieden werden.

Das Anbaugerät kann eine mit dem Fahrgestell verbundene, vorzugsweise umrahmte Ladefläche zur Aufnahme von Gegenständen, wie Gegengewicht und/oder Utensilien umfassen.

In einer bevorzugten Ausführungsform kann an Stelle einer Einzelachse eine Tandemachse vorgesehen sein. Hierdurch erhöht sich die Traglast des Anhängers. Der Einsatz einer Tandemachse kann nicht nur bei Anbau eines schweren Anbaugerätes sinnvoll oder sogar notwendig sein, sondern auch dann, wenn der Anhänger einen Vorratstank, beispielsweise für ein Streugut, umfasst. Dies kann dann der Fall sein, wenn es sich bei dem Anbaugerät um ein Winterdienstgerät mit Schneefräse und zusätzlichem Gerät zur Ausbringung von Streugut handelt.

Bei dem am Anbaugerät vorgesehenen Arbeitswerkzeug handelt es sich vorzugsweise um ein pflugloses Bodenbearbeitungsgerät, beispielsweise um einen Reitbahnplaner, eine Schleppmatte für Golfrasen, einen Besen, einen Schneepflug oder Schneefräse oder andere Arbeitsgeräte.

Der erfindungsgemäße Anhänger ist vor allem für die Bearbeitung von Sandböden und Rasenflächen, wie Sportplätzen aller Art, vorgesehen, die eine große und ebene Fläche haben, insbesondere für Reitflächen. Die Bearbeitung von Bodenflächen kann beispielsweise auf sandigen Reitplätzen erfolgen, indem diese Flächen durch entsprechende am Anbaugerät vorgesehene Werkzeuge (Arbeitsorgane), wie beispielsweise Bodenstriegel oder Borstenwalze, bearbeitet werden.

Überdies können mit dem Anhänger auch Baseball-, Polo- und Hockey-Felder etc., sowohl im Freien als auch unterm Dach bearbeitet werden. Außerdem ist der Anhänger für die Bearbeitung von grünen und sandigen Flächen von Golfplätzen und Parkanlagen geeignet.

Das Anbaugerät kann einen am Dreipunkt-Kraftheber befestigbaren Tragrahmen umfassen, an welchem wenigstens ein Arbeitswerkzug, wie eine Umkehrfräse lagerbar ist. Der Tragrahmen bildet somit eine Hilfsvorrichtung zum erleichterten Anbau von Arbeitsgeräten aus.

Die Betätigung des Hubwerkes und somit des Anbaugerätes kann durch ein Steuergerät erfolgen, welches vom Arbeitsplatz des Zugfahrzeuges aus bedienbar ist. Hierzu ist das Steuergerät mit einer entsprechend lang dimensionierten Leitung mit dem Anbaugerät verbunden.

Allerdings kann sich die Verkabelung zum Zugfahrzeug als recht aufwändig erweisen. Alternativ kann daher eine kabellose Fernsteuerung vorgesehen sein, mit deren Hilfe das Anbaugerät bedienbar ist. Eine solche Fernsteuerung kann beispielsweise in Form einer Funkübertragungseinrichtung, einer optischen Kommunikationseinrichtung, wie einer Infrarot-Übertragung oder über ein Smartphone mittels einer entsprechenden App ohne oder mit Sprachsteuerung erfolgen. Das Hubwerk kann somit auf einfache Art vom Fahrersitz des Zugfahrzeuges aus angehoben oder abgesenkt werden.

Das Zugfahrzeug mit angehängtem Anbaugerät bildet insgesamt ein Gespann aus, welches vorzugsweise zum Einsatz außerhalb öffentlicher Verkehrsstrassen vorgesehen ist. Soweit die relevanten Zulassungsbestimmungen für den Anhänger erfüllt, sind ist es jedoch auch für Fahrten auf öffentlichen Straßen geeignet.

Das Gespann kann auch ausschließlich elektromotorisch bewegt werden, wenn das Zugfahrzeug elektrisch angetrieben ist und über ausreichende Leistung verfügt. Als solches Zugfahrzeug kann beispielsweise ein Elektro-SUV eingesetzt werden. Die aktuell auf dem Automarkt angebotenen Elektro-SUV-Modelle verfügen über ein beachtliches Drehmoment bis nahezu 400 Nm. Da ein Gespann ohne Verbrennungsmotoren keine Abgase emittiert, ist es insbesondere für den Betrieb innerhalb von Hallen, beispielsweise Reithallen, gut geeignet.

Die Erfindung ist in Ausführungsbeispielen anhand der Zeichnung näher erläutert. Die Figuren zeigen:
- Fig. 1: einen Anhänger gemäß Erfindung, in einer perspektivischen Ansicht auf seine Heckseite;
- Fig. 2: den Anhänger gemäß Fig. 1, in einer schematischen Seitenansicht;
- Fig. 3a und 3b: ein dreiteiliges Gespann, bestehend aus einem Zugfahrzeug, einem Anhänger und einem Anbaugerät, in Ruhe- und Arbeitsposition, ebenso in einer schematischen Seitenansicht;
- Fig. 4: den Anhänger gemäß Figuren 1 und 2 in einer perspektivischen Ansicht auf seine Vorderseite;
- Fig. 5: eine andere Ausführungsform des Anhängers mit einer Tandemachse in einer schematischen Seitenansicht; und
- Fig. 6: ein vierteiliges Gespann, bestehend aus einem Schneeschieber, einem Zugfahrzeug, einem Anhänger und einem Salzstreuer-Aufsatz, ebenso in einer schematischen Seitenansicht.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination.

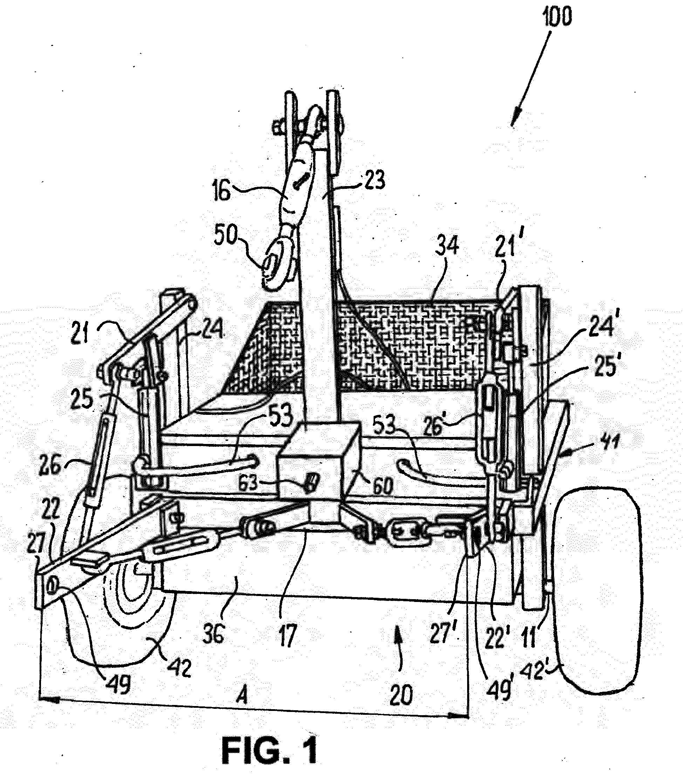

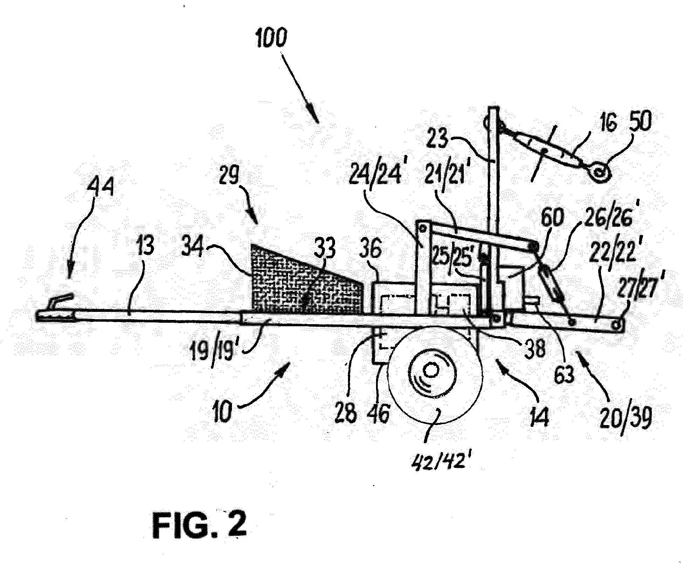

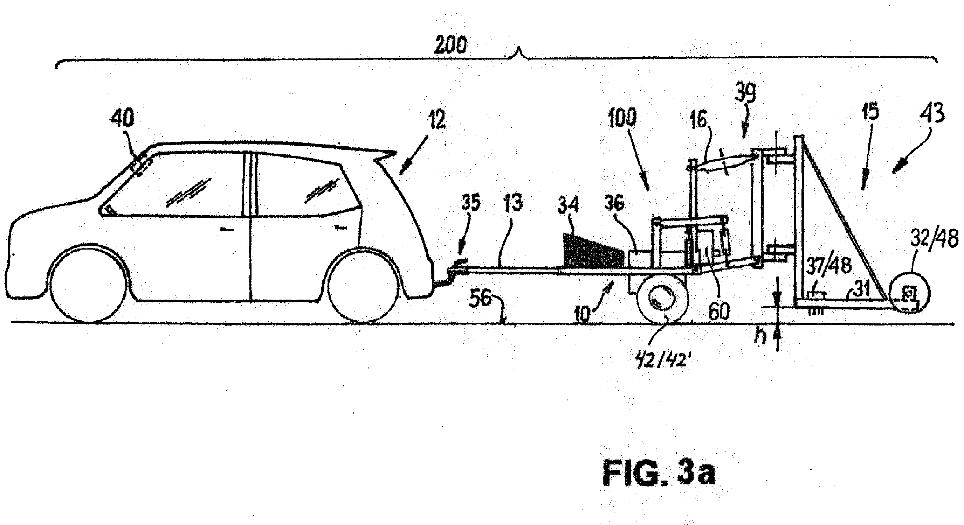

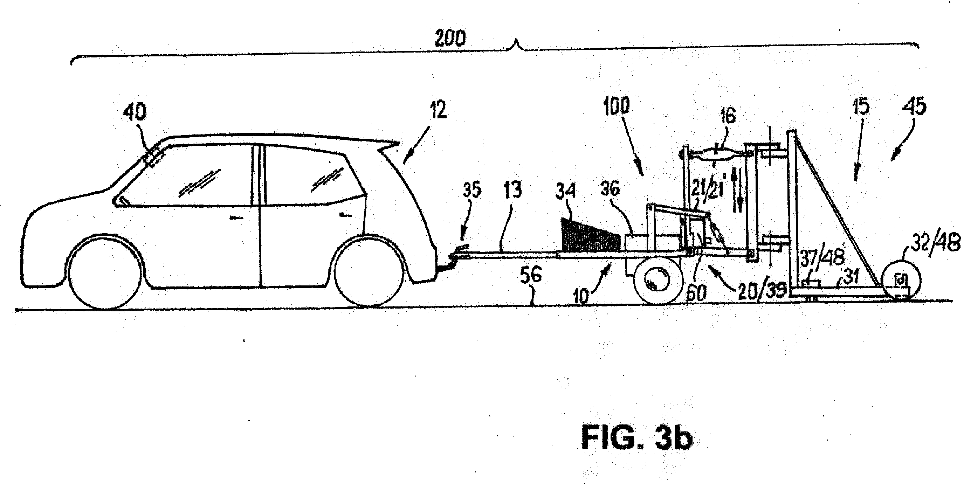

In den Figuren 1 und 2 ist ein erfindungsgemäßer Anhänger 100 mit einem Hubwerk 39 dargestellt. An das Hubwerk 39 ist ein Anbaugerät 15 koppelbar (vgl. Fig. 3a und 3b). Der Anhänger 100 umfasst ein aus einem rechteckigen Rahmen 41 und einer starren Fahrzeugachse 11 zusammengestelltes Fahrgestell 10. Der flächige Rahmen 41 besteht aus miteinander verschweißten Vierkantprofilen, nämlich aus zwei Längsholmen 19, 19', einem vorderen Querholm 18 und einem heckseitigen Querholm 17, wobei an den vorderen Querholm 18 eine Deichsel 13 angeschraubt ist. Die Deichsel 13 läuft in ein Kupplungsteil 44 aus, zur Ausbildung einer in Fig. 3 gezeigten, bei Personenkraftwagen üblichen, Kugelkopfkupplung 35 und kann längenverstellbar sein. An der Fahrzeugachse 11 sind zwei Räder 42, 42' gelagert.

Zwischen den Längsholmen 19, 19' ist ein rechteckiger Kasten 36 angeordnet, in welchem ein Stromversorgungsgerät 30 Platz findet. Das Stromversorgungsgerät 30 umfasst eine Batterie 28, mit welcher eine elektrohydraulische Pumpe 38 angetrieben ist. Die Batterie 28 und die Pumpe 38 sind im Kasten 36 nebeneinander untergebracht. Die Batterie 28 hat im dargestellten Ausführungsbeispiel eine Kapazität von 215 Ah bei der Spannung 12V und wiegt etwa 55 kg (Bei der Kapazität 110 Ah etwa 26 kg).

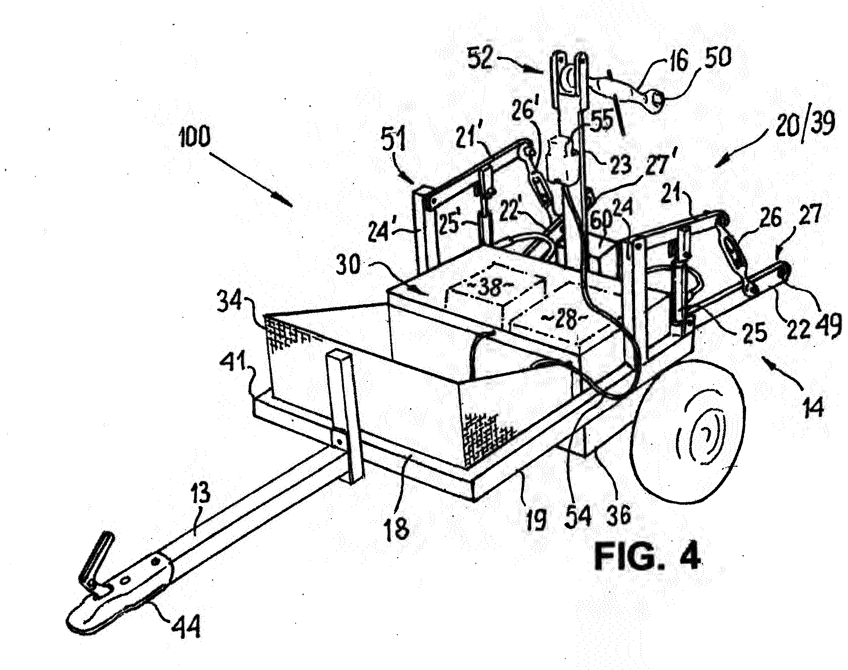

Wie insbesondere den Figuren 2 und 4 zu entnehmen ist, ist der Kasten 36 samt Inhalt im niedrigen Bereich des Fahrgestells 11 so platziert, dass er sich mit seinem Boden 46 auf der starren Fahrzeugachse 11 abstützt.

Im dargestellten Ausführungsbeispiel ist an einer Vorderseite 29 des Anhängers ein Korb 34 platziert, welcher in Seitenansicht (vgl. Fig. 2) trapezförmig ist und eine Ladefläche 33 zur Aufnahme von benötigten Utensilien bildet. In dem Korb 34 kann auch ein Gegengewicht untergebracht sein, mit welchem das Gleichgewicht des mit einem Anbaugerät 15 belasteten Anhängers 100 verbessert werden kann.

An den Längsholmen 19, 19' sind nach oben ragende Seitenständer 24, 24' und an dem heckseitigen Querholm 17 des Rahmens 41 ein ebenso nach oben ragender Zentralständer 23 angeordnet. An den freien Enden 51; 52 der Seitenständer 24, 24' und des Zentralständers 23 sind Teile eines Hubwerkes 39 gelagert.

Das in einem Heckbereich 14 des Anhängers 100 angeordnete Hubwerk 39 stellt einen Dreipunkt-Kraftheber 20 dar, umfassend zwei am Querholm 17 schwenkbar gelagerte Unterlenker 22, 22', einen oberen, am Ende 52 des Zentralständers drehbar gelagerten Oberlenker 16 und zwei an den Enden 51 der Seitenständer 24, 24' ebenso drehbar gelagerte, hebelartige Hubarme 21, 21'. Weiterhin umfasst der Dreipunkt-Kraftheber 20 zwei elektrohydraulisch betätigbare Hydraulikzylinder 25, 25' und zwei regulierbare Spannschlösser 26, 26', welche zwischen den Hubarmen 21, 21' und den Unterlenkern 22, 22' verspannt sind.

Der als Gewindespindel ausgeführte Oberlenker 16 ermöglicht die Verstellung der Neigung des Anbaugerätes 15. Die Hubarme 21, 21' leiten die Hubarbeit der Hydraulikzylinder 25, 25' an die Unterlenker 22, 22'. Die Fig. 1 zeigt über die Öffnungen am Kasten 36 von der Pumpe 38 zu den Hydraulikzylindern 25, 25' geführte Hydraulikleitungen 53. Im Kasten 36 ist ein Hydrauliköltank untergebracht.

In den dargestellten Ausführungsbeispielen umfasst der Anhänger 100, 300, 500 einen Verbrennungsmotor 60 mit einer Leistung von 4,8 KW (6,5 PS). Selbstverständlich ist auch der Einsatz eines Verbrennungsmotors mit anderer Leistung möglich. Weiterhin ist es auch möglich, den Anhänger 100, 300, 500 rein elektrisch zu betreiben und auf einen hydraulischen Antrieb zu verzichten. In diesem Fall wird das Hubwerk 39 mit elektrisch betätigbarem Arbeitszylindern anhebbar und absenkbar. Die Steuerung des Anbaugeräts 15 erfolgt vorzugweise komplett vom Fahrersitz der Zugmaschine.

An den freien Enden 27, 27' der Unterlenker 22, 22 sind Aufnahmeöffnungen 49, 49' eingebracht, welche in einer anderen Ausführung der Unterlenker durch Fanghaken ersetzt werden können. Ein Abstand A (vgl. Fig. 1) zwischen den Enden 27, 27' der Unterlenker 22, 22' ist einstellbar. Die freien Enden 27, 27' der Unterlenker 22, 22' und ein freies Ende 50 des Oberlenkers 16 bilden eine an sich bekannte Dreipunkt-Aufhängung aus, an welcher das Anbaugerät 15 befestigt ist.

Bei dem in den Figuren 3a und 3b dargestellten Ausführungsbeispiel umfasst das Anbaugerät 15 einen Tragrahmen 31, an dessen unteren Teil ein Arbeitswerkzeug 48, hier eine Umkehrfräse 32, gelagert ist. Der Umkehrfräse 32 ist ein Bodenstriegel 37 vorgeschaltet.

Gemäß Fig. 4 kann das Hubwerk 39 und somit das Anbaugerät 15 über ein Kabel 54 von einem manuellen Steuermodul 55 (hier eingehängt am Zentralständer 23) gesteuert werden. Alternativ zu dem beschriebenen Steuermodul 55 mit Kabel 54 kann auch eine Fernsteuerung 40 vorgesehen sein (vgl. Fig. 3a und 3b).

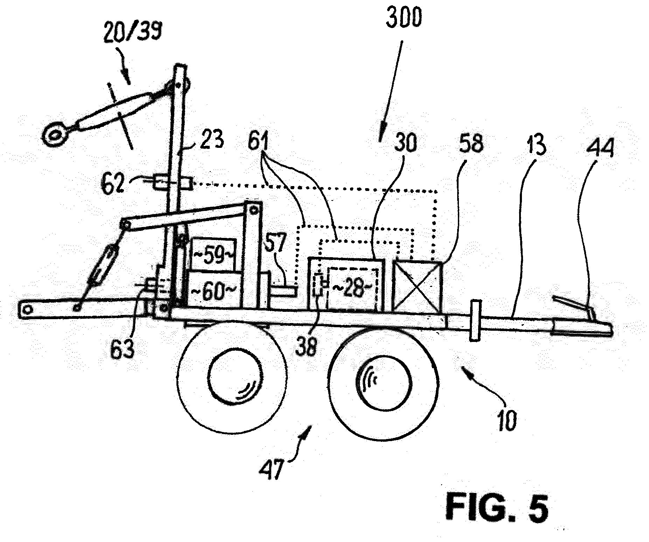

In Fig. 5 ist ein Anhänger 300 mit einer Tandemachse 47 dargestellt. Am Fahrgestell 10 sind folgende Hauptteile platziert: ein Verbrennungsmotor 60 mit einem Kraftstofftank 59, ein bereits beschriebenes Stromversorgungsgerät 30 enthaltend die Batterie 28 und elektrohydraulische Pumpe 38, wie auch aus der Fig. 2 ersichtlich, sowie ein zentraler Hydrauliköltank 58. Im Betrieb wird das Hydrauliköl über Leitungen 61 den Pumpen 38, 57 und - nach Bedarf - den am Zentralständer 23 befestigten Hydraulikanschlüssen 62 für anzubauende Arbeitsgeräte zugeführt.

Der Elektromotor (Batterie 28 mit elektrohydraulischer Pumpe 38) soll vorrangig nur zum Anheben und Absenken des Arbeitsgerätes eingesetzt werden. Für den Antrieb der Arbeitswerkzeuge mit größerem Energiebedarf, wie beispielsweise einer Bodenfräse, ist eine Zapfwellen-Schnittstelle 63 vorgesehen, an welche die Gelenkwelle des Arbeitswerkzeuges angeschlossen werden kann.

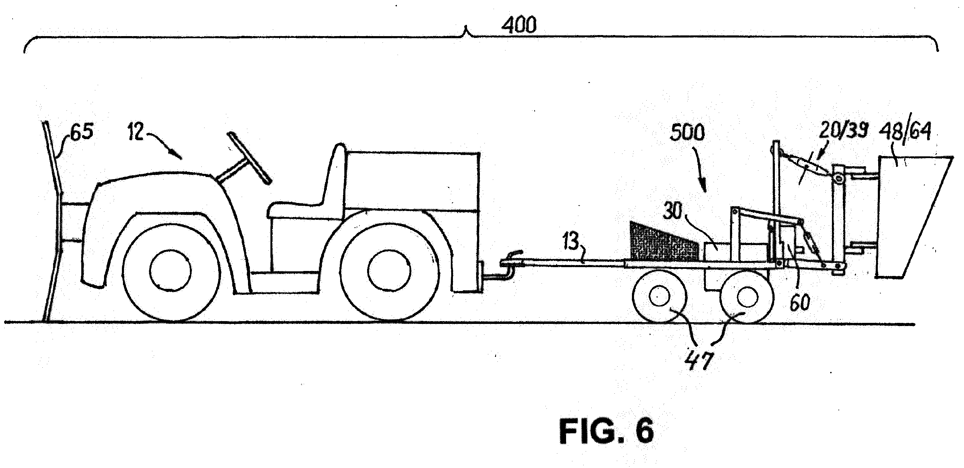

Die Fig. 6 zeigt ein für den Winterdienst vorgesehenes Gespann 400, umfassend ein Quad (Zugfahrzeug 12), einem Anhänger 500 mit Tandemachse 47 und einem Arbeitswerkzeug (Salzstreuer 64). An der Front des Quads ist ein Schneeschieber 65 abnehmbar befestigt. Mit dem Gespann 400 können verschneite bzw. vereiste Flächen behandelt werden.

### Funktionsweise (in Bezug auf die Fig. 4)

Gemäß Fig. 4 kann das Hubwerk 39 und somit das Anbaugerät 15 über ein Kabel 54 von einem manuellen Steuermodul 55 (hier eingehängt am Zentralständer 23) gesteuert werden.

### Funktionsweise (in Bezug auf die Figuren 3a und 3b)

Eine Reitbahn 56 ist infolge eines durchgeführten Reitturniers beschädigt und weist zahlreiche tiefe Hufspuren auf. Die Reitbahn 56 soll eben, rutschfest, saugfähig und federnd elastisch sein. Üblicherweise umfasst der Reitboden eine Mischung aus Sand, Sägespänen und zu Schnitzeln geschredderten Kunststoffteilen.

Mit Hilfe eines in Figuren 3a und 3b dargestellten, aus einem Zugfahrzeug 12, dem Anhänger 100 und dem Anbaugerät 15 zusammengestellten Gespanns 200 wird die Reitbahn 56 (Trittfläche) wieder in einen nutzbaren Zustand gebracht.

Der Anhänger 100 ist an das Zugfahrzeug 12 angekoppelt und ruht mit seinen Rädern 42, 42' auf der zu bearbeitenden Reitbahn 56. In Figur 3a befindet sich das am Hubwerk 39 angehängte Anbaugerät 15 in einer Ruheposition 43, bei der der Tragrahmen 31 um einen Betrag h von der Reitbahn 56 angehoben ist und keinen Kontakt mit der Trittfläche hat. Dieser Zustand ist von einem sich am Fahrersitz (beispielsweise am Cockpit oder an der A-Säule des Fahrzeuges) befindlichen Steuerungselementes registriert.

Das Steuerungselement (ein Chip) ist Teil einer nicht detailliert dargestellten, auf Funkprinzip funktionierenden Fernsteuerung 40. Mit einem Tastendruck oder einem geeigneten Sprachbefehl (zum Beispiel "senken") wird ein Signal an einen sich am Stromversorgungsgerät 30 befindlichen Empfänger gesendet. Infolge dessen wird das Anbaugerät 15 zu einer Arbeitsposition 45 (vgl. Fig. 3b) abgesenkt. Eine Rückmeldung vom Empfänger wird durch das Steuerungselement bestätigt und das Gespann 200 kann in Bewegung gesetzt werden.

Dadurch, dass man das Anbaugerät 15 sehr schnell und komfortabel Anheben und Absenken kann, lassen sich beispielsweise beim Einsatz in der Reithalle auch die schwer zugänglichen Eckflächen gut bearbeiten. Die Ecke wird zunächst in Vorwärtsfahrt mit abgesenktem Arbeitswerkzeug in Form einer 90°-Kurve durchfahren. Bei Übergang der 90°-Kurve in die nachfolgende Gerade wird das Gespann gestoppt, dass Anbaugerät 15 angehoben und rückwärts in die Ecke rangiert. Nachfolgend wird das Anbaugerät 15 wieder abgesenkt und die Bearbeitung des Reitbodens in Vorwärtsfahrt fortgesetzt. Der außerhalb des Radius liegende Bereich, der bei Vorwärts-Kurvenfahrt unbearbeitet bliebe, kann somit durch einfaches Rangieren mit Anheben und Absenken des Anbaugerätes 15 mitbearbeitet werden.

### Bezugszeichenliste

- 10: Fahrgestell
- 11: Fahrzeugachse
- 12: Zugfahrzeug
- 13: Deichsel
- 14: Heckbereich
- 15: Anbaugerät
- 16: mittiger Oberlenker
- 17: Querholm (am Heck)
- 18: Querholm (vorne)
- 19, 19': Längsholm
- 20: Dreipunkt-Kraftheber
- 21, 21': Hubarm
- 22, 22': Unterlenker
- 23: Zentralständer
- 24, 24': Seitenständer
- 25, 25': Hydraulikzylinder
- 26, 26': Spannschloss
- 27, 27': freies Ende (von Unterlenker)
- 28: Batterie
- 29: Vorderseite (von Anhänger)
- 30: Stromversorgungsgerät
- 31: Tragrahmen
- 32: Umkehrfräse
- 33: Ladefläche
- 34: Korb
- 35: Kugelkopfkupplung
- 36: Kasten
- 37: Bodenstriegel
- 38: Pumpe
- 39: Hubwerk
- 40: Fernsteuerung
- 41: Rahmen
- 42,42': Rad
- 43: Ruheposition
- 44: Kupplungsteil
- 45: Arbeitsposition
- 46: Boden (von 36)
- 47: Tandemachse
- 48: Arbeitswerkzeug
- 49, 49': Aufnahmeöffnung (von 22)
- 50: freies Ende (von 16)
- 51: freies Ende (von 24)
- 52: freies Ende (von 23)
- 53: Hydraulikleitung
- 54: Kabel (Fig. 4)
- 55: Steuermodul (manuell)
- 56: Reitbahn
- 57: Hydraulikpumpe
- 58: Hydrauliköltank
- 59: Kraftstofftank
- 60: Verbrennungsmotor
- 61: Leitung
- 62: Hydraulikanschlüsse
- 63: Zapfwellen-Schnittstelle
- 64: Salzstreuer
- 65: Schneeschieber

- 100; 300; 500: Anhänger
- 200; 400: Gespann
- A: Abstand
- h: Betrag

## Patentansprüche

1. An ein Zugfahrzeug (12) koppelbarer Anhänger (100; 300; 500) umfassend:
- ein Fahrgestell (10) mit wenigstens einer Fahrzeugachse (11) und einer Deichsel (13),
- ein an das Fahrgestell (10) gekoppeltes Hubwerk (39)
- einen Verbrennungsmotor (60),
- ein Stromversorgungsgerät (30) zum Antrieb des Hubwerks (39) und/oder eines Arbeitswerkzeugs (48),
- wenigstens eine Hydraulikpumpe (57; 38), die von dem Verbrennungsmotor (60) antreibbar ist,
**dadurch gekennzeichnet, dass**
- die Fahrzeugachse (11) gegenüber dem Fahrgestell (10) starr angeordnet ist,
- das Hubwerk zur Aufnahme eines Anbaugerätes (15) vorgesehen ist, wobei das Anbaugerät (15) ein Arbeitswerkzeug (48) umfasst und mittels des Hubwerks (39) aus einer Ruheposition (43) in eine Arbeitsposition (45) bringbar ist und umgekehrt, und
- das Hubwerk (39) einerseits an das Fahrgestell (10) derart gekoppelt ist und andererseits an das Anbaugerät (15) derart koppelbar ist, dass bei Absenken oder Anheben des Anbaugerätes (15) eine Relativbewegung zwischen Fahrgestell (10) und Anbaugerät (15) stattfindet und das Arbeitswerkzeug (48) gegenüber dem Fahrgestell (10) anhebbar oder absenkbar ist.

2. Anhänger (100; 300; 500) nach Anspruch 1, **dadurch gekennzeichnet, dass** ein zentraler Hydrauliköltank (58) zur Versorgung der Hydraulikpumpe (57; 38) mit Hydrauliköl vorgesehen ist.

3. Anhänger (100; 300; 500) nach einem der Ansprüche 1 oder 2, **dadurch gekennzeichnet, dass** das Anbaugerät (15) eine Zapfwellen-Schnittstelle (63) umfasst, an welche eine Antriebs-Gelenkwelle eines Arbeitswerkzeuges (48), beispielsweise einer Schnee- oder Bodenfräse, anschließbar ist.

4. Anhänger (100; 300; 500) nach einem der Ansprüche 1 bis 3, **dadurch gekennzeichnet, dass** das Stromversorgungsgerät (30) im Bereich einer am Anhänger (100) vorgesehenen Fahrzeugachse (11; 47), bevorzugt in einem niedrigen Bereich des Fahrgestells (10), angeordnet ist.

5. Anhänger (100; 300; 500) nach einem der Ansprüche 1 bis 4, **dadurch gekennzeichnet, dass** das Stromversorgungsgerät (30) wenigstens teilweise von einer eingebauten oder externen Solarstromanlage aufladbar ist.

6. Anhänger nach einem der Ansprüche 1 bis 5, **dadurch gekennzeichnet, dass** das Stromversorgungsgerät (30) mit wenigstens einem Erhaltungsgerät verbindbar ist.

7. Anhänger (100; 300; 500) nach einem der Ansprüche 1 bis 6, **dadurch gekennzeichnet, dass** das Stromversorgungsgerät (30) wenigstens einen wiederaufladbaren Akkumulator oder wenigstens eine austauschbare Batterie (28) umfasst.

8. Anhänger (100; 300; 500) nach Anspruch 7, **dadurch gekennzeichnet, dass** an den Akkumulator oder an die Batterie (28) wenigstens eine elektrohydraulische Pumpe (38) angeschlossen ist.

9. Anhänger (100; 300; 500) nach einem der Ansprüche 1 bis 8, **dadurch gekennzeichnet, dass** als Hubwerk (39) ein Dreipunkt-Kraftheber (20) mit vorzugsweise zwei elektrohydraulisch betätigbaren Hydraulikzylindern (25, 25') eingesetzt ist.

10. Anhänger (100; 300; 500) nach Anspruch 9, **dadurch gekennzeichnet, dass** das Anbaugerät (15) einen am Dreipunkt-Kraftheber (20) befestigbaren Tragrahmen (31) umfasst, an welchem wenigstens ein Arbeitswerkzeug (48), wie eine Umkehrfräse (32) oder ein Bodenstriegel (37) gelagert ist.

11. Anhänger (100; 300; 500) nach einem der Ansprüche 1 bis 10, **dadurch gekennzeichnet, dass** am Fahrgestell (10) eine vordere, vorzugsweise umrahmte Ladefläche (33) zur Aufnahme von Gegenständen, wie Gegengewicht und/oder Utensilien vorgesehen ist.

12. Anhänger (100; 300; 500) nach einem der Ansprüche 1 bis 11, **dadurch gekennzeichnet, dass** es sich bei dem Anbaugerät (15) um ein vorzugsweise pflugloses Bodenbearbeitungsgerät, insbesondere um einen Reitbahnplaner handelt.

13. Anhänger (100; 300; 500) nach einem der Ansprüche 1 bis 12, **dadurch gekennzeichnet, dass** das Anbaugerät (15) und/oder das Hubwerk (39) von dem Zugfahrzeug über eine Leitung oder kabellos, beispielsweise mit Hilfe eines Steuermoduls (55) oder einer Fernsteuerung (40), steuerbar ist.

14. Gespann (200; 400), umfassend ein Zugfahrzeug (12) und einen an das Zugfahrzeug (12) angehängten Anhänger (100; 300; 500) mit einem Anbaugerät (15) nach einem der Ansprüche 1 bis 13.

## Claims

1. A trailer (100; 300; 500) that can be coupled to a towing vehicle (12), comprising:
- a chassis (10) with at least one vehicle axle (11) and a tow bar (13),
- lifting gear (39) coupled to the chassis (10),
- an internal combustion engine (60),
- a power supply unit (30) for driving the lifting gear (39) and/or a working tool (48),
- at least one hydraulic pump (57; 38) that can be driven by the internal combustion engine (60),
**characterized in that**
- the vehicle axle (11) is rigidly mounted relative to the chassis (10),
- the lifting gear is provided for receiving an accessory attachment (15), wherein the attachment (15) comprises a working tool (48) and can be brought by means of the lifting gear (39) from a rest position (43) to a working position (45) and vice versa, and
- the lifting gear (39) is coupled on one hand to the chassis (10) in such a way and on the other hand can be coupled to the attachment (15) in such a way that when the attachment (15) is lowered or lifted, a relative movement takes place between the chassis (10) and the attachment (15) and the working tool (48) can be raised or lowered relative to the chassis (10).

2. The trailer (100; 300; 500) as claimed in claim 1, **characterized in that** a central hydraulic oil tank (58) is provided for supplying the hydraulic pump (57; 38) with hydraulic oil.

3. The trailer (100; 300; 500) as claimed in any one of claims 1 or 2, **characterized in that** the attachment (15) comprises a power take-off interface (63), to which a cardan drive shaft of a working tool (48), for example a snow blower or rotary tiller, can be connected.

4. The trailer (100; 300; 500) as claimed in any one of claims 1 or 3, **characterized in that** the power supply unit (30) is disposed in the region of a vehicle axle (11; 47) provided on the trailer (100), preferably in a low region of the chassis (10).

5. The trailer (100; 300; 500) as claimed in any one of claims 1 or 4, **characterized in that** the power supply unit (30) is at least partially rechargeable from a built-in or external solar power system.

6. The trailer as claimed in any one of claims 1 or 5, **characterized in that** the power supply device (30) is connectable to at least one trickle charging device.

7. The trailer (100; 300; 500) as claimed in any one of claims 1 or 6, **characterized in that** the power supply unit (30) comprises at least one rechargeable accumulator or at least one replaceable battery (28).

8. The trailer (100; 300; 500) as claimed in claim 7, **characterized in that** at least one electrohydraulic pump (38) is connected to the accumulator or to the battery (28).

9. The trailer (100; 300; 500) as claimed in any one of claims 1 or 8, **characterized in that** a three-point power lift (20) with preferably two electrohydraulically actuated hydraulic cylinders (25, 25') is used as the lifting gear (39).

10. The trailer (100; 300; 500) as claimed in claim 9, **characterized in that** the attachment (15) comprises a support frame (31) which can be fastened to the three-point power lift (20) and on which at least one working tool (48), such as a reversing tiller (32) or a ground harrow (37), is mounted.

11. The trailer (100; 300; 500) as claimed in any one of claims 1 or 10, **characterized in that** a front, preferably framed loading surface (33) for receiving objects, such as counterweights and/or utensils, is provided on the chassis (10).

12. The trailer (100; 300; 500) as claimed in any one of claims 1 or 11, **characterized in that** the attachment (15) is a preferably plowless drag device, in particular a riding arena leveller.

13. The trailer (100; 300; 500) as claimed in any one of claims 1 or 12, **characterized in that** the attachment (15) and/or the lifting gear (39) can be operated from the towing vehicle via a control line or by wireless means, for example with the aid of a control module (55) or a remote control (40).

14. A vehicle-trailer combination (200; 400) comprising a towing vehicle (12) and a trailer (100; 300; 500) attached to the towing vehicle (12) and having an attachment (15), as claimed in any one of claims 1 to 13.

## Revendications

1. Remorque (100 ; 300 ; 500) pouvant être accouplée à un véhicule tracteur (12), comprenant :
- un châssis (10) doté d'au moins un essieu de véhicule (11) et d'une barre d'attelage (13),
- un dispositif de levage (39) accouplé au châssis (10),
- un moteur à combustion interne (60),
- un appareil d'alimentation électrique (30) pour l'entraînement du dispositif de levage (39) et/ou d'un outil de travail (48),
- au moins une pompe hydraulique (57 ; 38) qui peut être entraînée par le moteur à combustion interne (60),
**caractérisée en ce que**
- l'essieu de véhicule (11) est disposé de manière rigide par rapport au châssis (10),
- le dispositif de levage est prévu pour recevoir un outil porté (15), l'outil porté (15) comprenant un outil de travail (48) et pouvant être amené d'une position de repos (43) à une position de travail (45) et vice versa au moyen du dispositif de levage (39), et
- le dispositif de levage (39) peut être accouplé d'une part au châssis (10) et d'autre part à l'outil porté (15) de telle sorte qu'en cas de descente ou de montée de l'outil porté (15), un mouvement relatif entre le châssis (10) et l'outil porté (15) a lieu et l'outil de travail (48) peut être relevé ou abaissé par rapport au châssis (10).

2. Remorque (100 ; 300 ; 500) selon la revendication 1, **caractérisée en ce qu'**un réservoir d'huile hydraulique central (58) est prévu pour alimenter la pompe hydraulique (57 ; 38) en huile hydraulique.

3. Remorque (100 ; 300 ; 500) selon l'une quelconque des revendications 1 ou 2, **caractérisée en ce que** l'outil porté (15) comprend une interface de prise de force (63) à laquelle on peut raccorder un arbre d'entraînement à cardan d'un outil de travail (48), par exemple d'un chasse-neige à fraise ou d'une fraiseuse de labour.

4. Remorque (100 ; 300 ; 500) selon l'une quelconque des revendications 1 à 3, **caractérisée en ce que** l'appareil d'alimentation électrique (30) est disposé dans la zone d'un essieu de véhicule (11 ; 47) prévu sur la remorque (100), de préférence dans une zone basse du châssis (10).

5. Remorque (100 ; 300 ; 500) selon l'une quelconque des revendications 1 à 4, **caractérisée en ce que** l'appareil d'alimentation électrique (30) peut être rechargé au moins en partie par une installation photovoltaïque externe.

6. Remorque selon l'une quelconque des revendications 1 à 5, **caractérisée en ce que** l'appareil d'alimentation électrique (30) peut être relié à au moins un appareil de maintien.

7. Remorque (100 ; 300 ; 500) selon l'une quelconque des revendications 1 à 6, **caractérisée en ce que** l'appareil d'alimentation électrique (30) comprend au moins un accumulateur rechargeable ou au moins une batterie remplaçable (28).

8. Remorque (100 ; 300 ; 500) selon la revendication 7, **caractérisée en ce qu'**au moins une pompe électrohydraulique (38) est raccordée à l'accumulateur ou à la batterie (28).

9. Remorque (100 ; 300 ; 500) selon l'une quelconque des revendications 1 à 8, **caractérisée en ce qu'**un attelage trois points (20) doté de préférence de deux vérins hydrauliques (25, 25') pouvant être actionnés de manière électrohydraulique est mis en oeuvre comme dispositif de levage (39).

10. Remorque (100 ; 300: 500) selon la revendication 9, **caractérisée en ce que** l'outil porté (15) comprend un cadre porteur (31) pouvant être fixé à l'attelage trois points (20) et au niveau duquel au moins un outil de travail (48) est monté, tel qu'un enfouisseur de pierre (32) ou une herse étrille (37).

11. Remorque (100 ; 300 ; 500) selon l'une quelconque des revendications 1 à 10, **caractérisée en ce qu'**une surface de charge avant (33), de préférence encadrée, est prévue sur le châssis (10) pour recevoir des objets, tels qu'un contrepoids et/ou des ustensiles.

12. Remorque (100 ; 300 ; 500) selon l'une quelconque des revendications 1 à 11, **caractérisée en ce que** l'outil porté (15) est de préférence un appareil de traitement du sol, en particulier sans labour, en particulier une herse de piste équestre.

13. Remorque (100 ; 300 ; 500) selon l'une quelconque des revendications 1 à 12, **caractérisée en ce que** l'outil porté (15) et/ou le dispositif de levage (39) peuvent être commandés par le véhicule tracteur par l'intermédiaire d'un câble ou sans câble, par exemple à l'aide d'un module de commande (55) ou d'une télécommande (40).

14. Ensemble attelé (200 ; 400), comprenant un véhicule tracteur (12) et une remorque (100 ; 300 ; 500) accrochée au véhicule tracteur (12), comprenant un outil porté (15) selon l'une quelconque des revendications 1 à 13.
